# EUROPEAN PATENT APPLICATION

(11) **EP 4 841 317 A1**
(43) Date of publication of application: **18.11.2026**
(21) Application number: 25175693.8
(22) Date of filing: 12.05.2025
(51) Int. Cl.: G02B 6/122, G02B 6/30, G02B 6/42, G02B 6/12

(54) **OPTICAL COUPLER, ITS USE AND FORMING METHOD**

(71) Applicant: Universität Heidelberg, 69117 Heidelberg (DE)
(72) Inventor: PERNICE, Wolfram, 69117 Heidelberg (DE); WENDLAND, Daniel, 69117 Heidelberg (DE)
(74) Representative: Vossius & Partner Patentanwälte Rechtsanwälte mbB

(57) **Abstract**

An optical coupler for coupling an optical fiber to a photonic integrated circuit, PIC, the optical coupler comprising: a first portion comprising a bottom surface, a light-reflecting surface inclined with respect to the bottom surface, and a reflective layer being arranged on the light-reflecting surface; and a second portion arranged on the light-reflecting surface, the second portion comprising a light entrance surface above the light-reflecting surface and a tapering region extending away from the first portion.

## Description

The present invention relates to optical couplers and, more specifically, it relates to an optical coupler for coupling light from an optical fiber to a photonic integrated circuit (PIC), a method of forming such an optical coupler and a use of such an optical coupler.

The efficient coupling of light from optical fibers to photonic integrated circuits (PICs) is a crucial challenge for highly integrated photonic applications. Although optical fibers excel at long-distance light transport, on-chip manipulation of light-for instance, in optical quantum computing, classical photonic processing or optical neural networks-requires a compact PIC. To fully exploit the benefits of both fibers and PICs, an effective coupling device is necessary.

Various approaches for fiber-to-chip coupling have been developed, each with its own drawbacks. Grating couplers, for example, are only efficient over narrow wavelength ranges, while edge couplers, although capable of broadband and efficient coupling, are limited to the chip edge. This limitation reduces the number of available coupling points and can complicate the integration of electronic contacts to active photonic components, with the additional risk of forming fragile connections.

There are also known methods relying on total internal reflection, but they are sensitive to environmental changes. In particular, the coupling efficiency is compromised when packaging adhesives come into contact with the coupler, as total internal reflection is based on the contrast of the material guiding the light and the material at which it should be reflected.

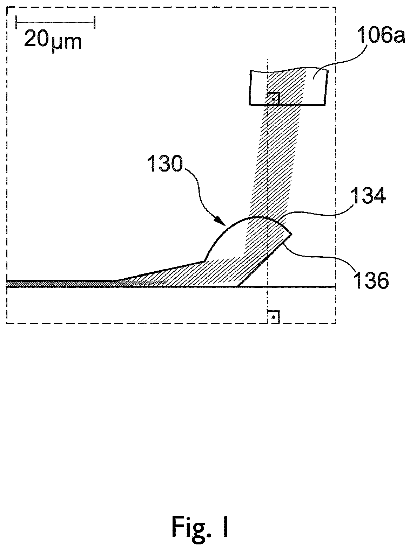

Fig. 1, for example, shows a vertical cross-section through an optical coupler for out-of-plane coupling based on total internal reflection. The total internal reflection coupler 130 comprises a focusing surface 134 and a reflection surface 136. The incident light beam from the optical fiber 106a enters the total internal reflection coupler 130 via the focusing surface 134 and is reflected at the reflection surface 136 to be redirected into the plane of the PIC. This approach is efficient and broadband; however, it suffers from the aforementioned drawback: the total internal reflection mechanism fails when another material touches the coupler at the reflection plane. Moreover, the overhanging parts of the coupler renders it mechanically unstable during packaging.

Thus, there remains a need for an improved fiber-to-chip coupling solution that addresses these limitations while maintaining high efficiency and broadband performance.

Accordingly, the present invention concerns an improved optical coupler, a method of forming it and its use to couple light from an optical fiber to a photonic integrated circuit.

In a first aspect, the present invention is directed to a method of forming an optical coupler for coupling light from an optical fiber to a photonic integrated circuit (PIC). The method comprises the following steps:
1) forming a first portion of the optical coupler on a substrate, the first portion comprising a light-reflecting surface inclined with respect to the substrate;
2) forming a reflective layer on the light-reflecting surface; and
3) forming a second portion of the optical coupler on the light-reflecting surface, wherein the second portion comprises a light entrance surface above the light-reflecting surface and a tapering region extending away from the first portion.

In a second aspect, the present invention is directed to an optical coupler for coupling light from an optical fiber to a photonic integrated circuit (PIC). The optical coupler comprises a first portion and a second portion. The first portion comprises a bottom surface, a light-reflecting surface inclined with respect to the bottom surface and a reflective layer arranged on the light-reflecting surface. The second portion is arranged on the light-reflecting surface and comprises a light entrance surface above the light-reflecting surface and a tapering region extending away from the first portion.

Preferably, the substrate, on which the optical coupler is formed, is a substrate comprising the PIC or in which the PIC is formed.

Preferably, the first portion and/or the second portion is formed by a 3D printing process such as direct laser writing, or imprint fabrication such as nanoimprint lithography.

Preferably, the first portion and/or the second portion comprises a photoresist material. Examples include those identified in "Optical properties of photoresists for femtosecond 3D printing: refractive index, extinction, luminescence-dose dependence, aging, heat treatment and comparison between 1-photon and 2-photon exposure", Schmid et al., Optical Materials Express Vol. 9, Issue 12, pp. 4564-4577 (2019), https://doi.org/10.1364/OME.9.004564. Specifically, the photoresist materials include IP-S, IP-Dip, IP-L, and IP-Visio - photoresists manufactured by Nanoscribe GmbH and OrmoComp - a hybrid organic-inorganic polymer (ORMOCER^{®}) developed by micro resist technology GmbH.

Preferably, the first portion and/or the second portion is transparent to light having a wavelength in the range from 100 nm to 4,000 nm, preferably from 200 nm to 3,000 nm, more preferably from 300 nm to 2,000 nm. The first portion may also be nontransparent to aforementioned light.

Preferably, the first portion is formed into a wedge shape, and one of its top faces being the light-reflecting surface.

The light-reflecting surface may comprise a planar, convex and/or concave surface. The light-reflecting surface may also be entirely a planar, convex or concave surface.

In one configuration, the light-reflecting surface comprises a convex or concave curvature placed within four planar (flat) corners, i.e. a curved surface intersecting a plane. These flat corners are not optically necessary since, ideally, the incoming optical mode-the region over which the light's electromagnetic field is significantly present-is radially symmetric and would not interact with them. However, they may simplify the fabrication process. For example, in the case that the first portion is formed by direct laser writing, the flat corners provide areas of consistent laser power distribution during writing, making it easier to control the polymerization process.

In contrast, the curved region requires continuous power adjustments due to variations in the reflection angle across the surface. By incorporating flat corners, it is possible to simplify fabrication by initially creating a shell structure and subsequently polymerizing any remaining liquid material within the coupler using a flood UV-exposure process.

The light-reflecting surface is inclined with respect to the substrate (or to the bottom surface of the first portion). The inclination angle between the light-reflecting surface and the bottom surface of the first portion, or between the light-reflecting surface and the substrate surface, is less than 45°. Preferably, this angle may be between 30° and 60°, more preferably between 40° and 50°.

When the light-reflecting surface is a planar surface-either entirely flat or comprising flat corners that, together, define a planar surface-this angle is determined by the respective normals of the planar surface and the bottom surface (or the substrate surface).

If the light-reflecting surface is solely curved, whether concave or convex, a reference planar surface can be hypothesized by approximating the curved surface as a spherical cap. The plane defined by the largest circle of this spherical cap serves as the reference planar surface. The angle is then determined using the normals of this reference planar surface and the bottom surface (or the substrate surface).

Preferably, the reflective layer comprises metal, preferably gold, silver and/or aluminum.

Preferably, the reflective layer is formed on the light-reflecting surface by physical vapor deposition (PVD), sputtering or atomic layer deposition (ALD).

Since reflection in the optical coupler of the present invention relies on a reflective coating rather than total internal reflection, the design is no longer limited to flat planes. As discussed, the light-reflecting surface can be fabricated with curved profiles-either inward or outward-to achieve focusing or defocusing effects. This flexibility enables additional beam shaping capabilities that were previously unattainable due to the efficiency constraints of total internal reflection.

Preferably, the second portion comprises a partial-sphere region and the tapering region, wherein the partial-sphere region forms the light entrance surface of the optical coupler.

The curvature of the partial-sphere region is decided by several factors. The optical properties of materials vary with wavelength, requiring adjustments to the dimensions accordingly. Additionally, a single-mode optical fiber has different core sizes at different wavelengths, meaning the focal spot must be adjusted, which in turn affects the required curvature.

Environmental conditions-such as the presence of glue, air, vacuum or other gases and liquids-also impact the focusing behavior of the focusing surface, necessitating further adjustments. For example, at wavelengths of 775 nm and 1,550 nm, radii are preferably in the range of 15-35 µm, more preferably 20-30 µm, even more preferably 23-27 µm.

Furthermore, the use of an elliptical focusing surface with different radii along the x, y, and z axes introduces additional design considerations. In such cases, the ratio between the radii may play a crucial role.

Incident light may come from above the light entrance surface.

Preferably, the light entrance surface is configured to focus incident light.

Preferably, the first and second portions are configured such that incident light entering the second portion through the light entrance surface is reflected by the reflective layer.

In one configuration, the light entrance surface is configured to defocus the incident light, and the reflective layer formed on the light-reflecting surface is configured to focus the defocused incident light.

Preferably, the first and second portions are configured such that light reflected by the reflective layer-for example, the aforementioned incident light-is directed into the tapering region.

The tapering region is for bridging a gap between the size of the optical mode at the fiber (large) and at the waveguide (small). Therefore, it preferably starts at a size similar to the waveguide mode and expands (preferably almost adiabatically) towards the focusing surface (e.g., light entrance surface or reflective layer) where it reaches a size larger than the mode size required at the fiber so that the focusing surface can refocus it down to the mode size of the fiber. Usually, this means sizes in the hundreds of nanometers to single digits µm at the waveguide side, to several tens of µm shortly before the focusing surface.

Specifically, the tapering region preferably tapers from a first dimension to a second dimension. The first and second dimensions may be defined as perpendicular to the light propagation direction (or waveguide axis).

To achieve an almost adiabatic transition between different sizes, in principle, the larger the taper, the better the optical mode can be reshaped from small to large. However, practical constraints such as size limitations, surface roughness and absorption counterbalance this advantage. Preferably, taper widths in the range of 30 µm to approximately 200 µm may be used, resulting in small single-digit taper angles, typically below 5°.

Specifically, the first dimension is preferably 0.2 µm to 4 µm, more preferably 0.6 µm to 2 µm, and even more preferably 0.7 µm to 1.5 µm, and the second dimension is 1 µm to 8 µm, more preferably 1.5 µm to 4 µm, even more preferably 2.5 µm to 3.7 µm.

Preferably, the optical coupler is an out-of-plane coupler, namely a coupler configured to receive incident light provided by the optical fiber from a direction not substantially horizontal to the surface of the substrate, and more preferably from a direction substantially perpendicular to the surface of the substrate.

In a third aspect, the present invention concerns a photonic integrated circuit (PIC) on which one or more optical couplers according to the above disclosure are provided.

In a fourth aspect, the present invention concerns use of the optical coupler according to the above disclosure to couple light from an optical fiber to a PIC.

Accordingly, the present invention improves the optical coupler's stability and shields it from environmental influences, facilitating easier mass packaging. Moreover, the ability to reshape the reflection plane enhances coupling efficiency and enables more versatile outgoing beam shapes. As a result, the overall efficiency of the optical coupler is significantly higher than previous designs, overcoming a major packaging bottleneck.

The accompanying drawings illustrate various embodiments of the invention and, together with the detailed description, serve to provide a better understanding of the technical features and advantages of the disclosed subject-matter. The drawings are not necessarily to scale, and certain features may be exaggerated or omitted for clarity.
FIG. 1 is a schematic representation of an optical coupler based on total internal reflection.
FIGs. 2A-2F illustrates respective light-reflecting surfaces of the optical couplers according to the invention, wherein FIGs. 2B, 2D and 2F are the cross-sections of the optical couplers shown in FIGs. 2A, 2C and 2E, respectively.
FIG. 3 depicts a light-reflecting surface covered by a reflective layer.
FIG. 4 is a schematic representation of an optical coupler according to the invention.
FIGs. 5A and 5B are micrographs of the optical couplers according to the invention.

The following detailed description provides exemplary embodiments of the invention to enable those skilled in the art to practice the disclosed subject-matter. While specific configurations, materials, and process steps may be described, it will be understood that these are provided for illustrative purposes only and do not limit the scope of the invention. Variations and modifications may be made without departing from the scope of the claims. Unless explicitly stated otherwise, singular terms may include plural variations, and vice versa. The terms "comprise," "include" and "have" are used in an open-ended sense, meaning that additional elements or steps may be present. However, when the term "comprise" is used in reference to a material, it is to be understood that the associated subject may include it as a component alongside other elements ("open-ended sense") or consist entirely of that material. Reference numerals in the drawings are used consistently to denote similar components across different embodiments.

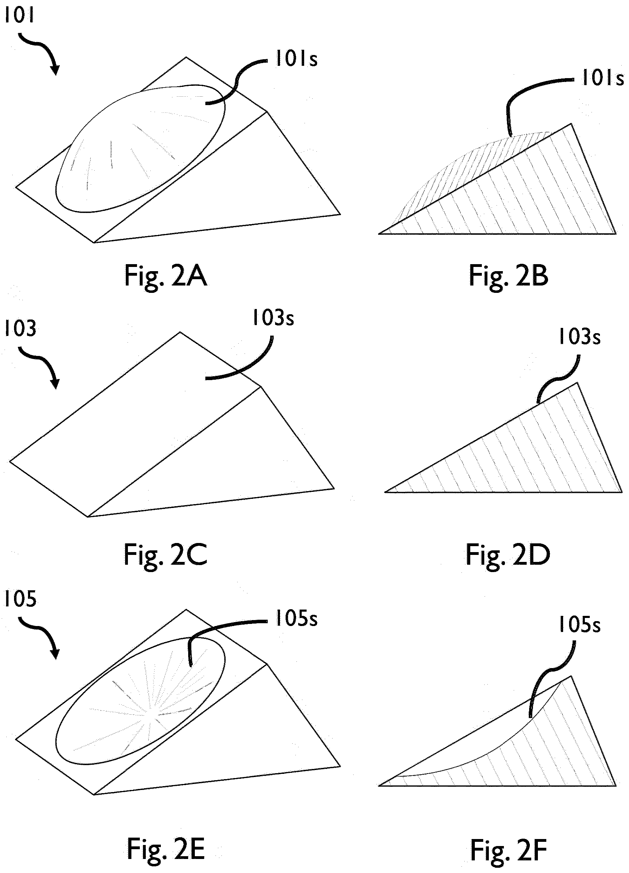

According to the invention, a method of forming an optical coupler for coupling light from an optical fiber to a photonic integrated circuit is provided. The method comprises a first step of forming first portions 101, 103, 105 of the optical coupler on a substrate, as illustrated in Figs. 2A-2F. These first portions 101, 103, 105 comprises a photoresist material, structured using a lithographic fabrication method, such as direct laser writing. Each portion is formed into a wedge shape, as shown in Figs. 2A-2F.

Each first portion 101, 103, 105 includes a light-reflecting surface 101s, 103s, 105s, which is inclined relative to the substrate or to the bottom surface of the respective first portion.

As depicted in Figs. 2A-2F, the light-reflecting surface may take different forms: it can function as a defocusing mirror with a convex curvature (Figs. 2A and 2B), a planar reflection surface (Figs. 2C and 2D), or a focusing mirror with a concave curvature (Figs. 2E and 2F). For the defocusing mirror and the focusing mirror, the light-reflecting surfaces 101s, 105s feature a convex and concave curvature, respectively, positioned within four flat corners.

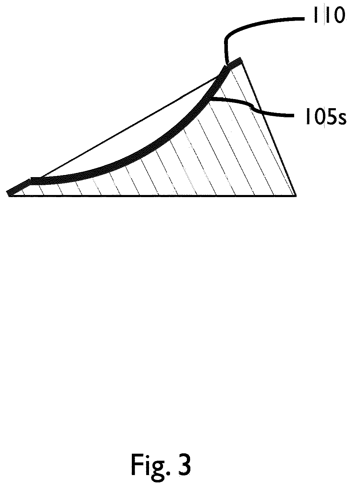

In the second step of the method, a reflective layer 110 is deposited onto the light-reflecting surface 105s of the first portion 105. Fig. 3-showing a cross-sectional view as the one shown in Fig. 2F-illustrates this process for the first portion 105, though the same applies to other possible configurations. The reflective layer 110 is made of a highly reflective material, such as gold, silver or aluminum, and is deposited using physical vapor deposition (PVD), sputtering, or atomic layer deposition (ALD).

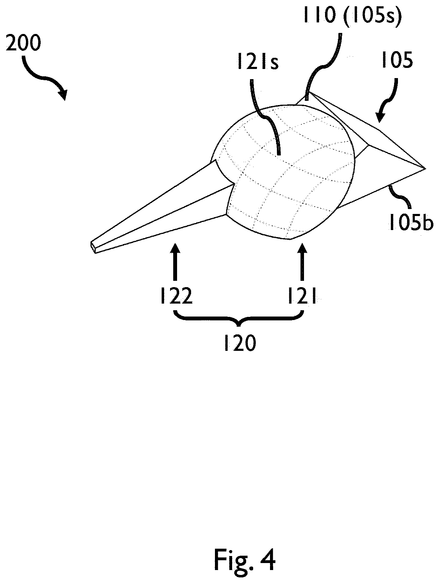

In the third step, as shown in Fig. 4, a second portion 120 of the optical coupler is formed on light-reflecting surface 105s. The second portion 120 comprises a partial-sphere region 121, connecting to a tapering region 122 extending (tapering) away from the first portion 105. The light entrance surface 121s, provided by the partial-sphere region 121, is positioned above, i.e., on top of and in front of, the light-reflecting surface 105s.

The second portion 120 comprises a photoresist material and is formed using a lithographic fabrication method, such as direct laser writing.

The above-described method results in an optical coupler 200, as illustrated in Fig. 4, designed for coupling light from an optical fiber to a photonic integrated circuit (PIC). While neither an optical fiber nor a PIC is depicted in Fig. 4, the optical coupler 200 is intended for use in a setup similar to that shown in Fig. 1, where the other optical coupler functions in conjunction with an optical fiber 106a.

The optical coupler 200 accordingly comprises the first portion 105 and the second portion 120. The first portion 105 comprises a bottom surface 105b, the light-reflecting surface 105s inclined with respect to the bottom surface 105b, and the reflective layer 110 deposited on the light-reflecting surface 105s. The second portion 120 is positioned on the light-reflecting surface 105s and defines the light entrance surface 121s, located above the light-reflecting surface 105s, as well as the tapering region 122 that extends away from the first portion 105.

When light, for example from optical fiber 106a (see Fig. 1), enters the optical coupler 200 through the light entrance surface 121s, it is reflected by the reflective layer 110, redirected into the tapering region 122, and subsequently coupled into the PIC.

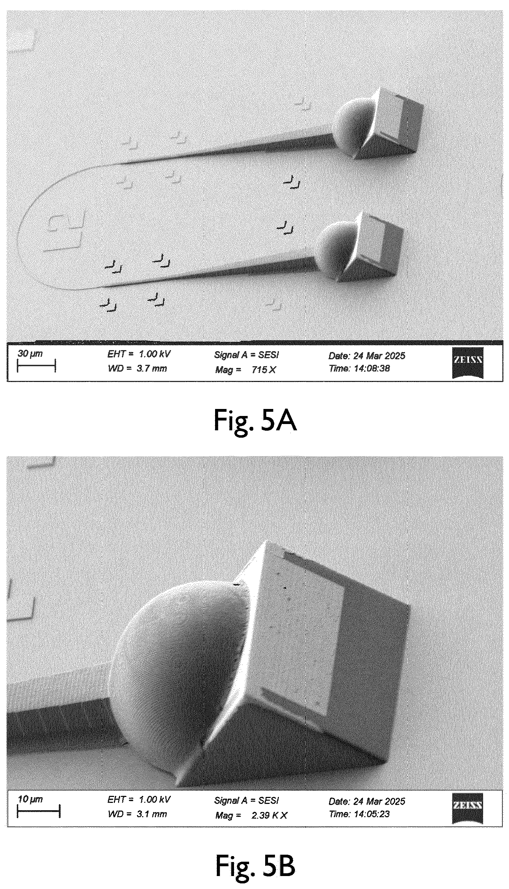

Fig. 5A shows the prototype of two optical couplers according to the invention. Fig. 5B shows an enlarged view of one of the optical couplers. These optical couplers are structured essentially as the example illustrated in Fig. 4 and as explained above.

A commercially available wafer with a Si/SiO₂/Si₃N₄ layer stack was used as the substrate. This wafer was structured to form the U-shaped waveguide as shown in Fig. 5A. Alongside the waveguide, alignment markers-such as squares and labels ("L2")-were created. These structures were aligned to previously fabricated gold markers on the same chip. The waveguides were created using a reactive ion etching (RIE) process.

Following the waveguide fabrication, prisms or reflection blocks-which form the first portion of the optical coupler-were fabricated and aligned to the etched markers in the Si₃N₄ layer. These structures were produced using a Nanoscribe Quantum X system via two-photon polymerization, using IP-S photoresist and Nanoscribe's Two-Photon Grayscale Lithography.

Next, a layer of PMMA electron beam resist was applied via spin coating and patterned by e-beam lithography, aligned to the gold markers mentioned above. This structuring resulted in resist-free areas around the reflection blocks after development, allowing selective coating of the reflection blocks with a gold reflective layer using physical vapor deposition (PVD). The remaining PMMA was removed in a PGMEA bath, which also removed excess gold, leaving the gold coating only on the reflection blocks.

Subsequently, another two-photon polymerization step was used to fabricate the second portion of the optical coupler, the linear taper and mode converter to the Si₃N₄ waveguide. This step was performed with IP-Dip2 in the Nanoscribe Quantum X, using regular 3D printing method to allow precise control over printing parameters at every location.

The U-bend configuration as shown in Fig. 5A enables simultaneous in- and out-coupling using a fiber array aligned normal to the chip surface (0° angle). The measured coupling efficiency at 1550 nm wavelength was approximately -2 dB (^{~}63%) per coupler as the fabrication process has not yet been fully optimized. Simulations indicate that with the addition of a higher-index cladding, the coupling efficiency could improve to -0.2 dB (^{~}95%) per coupler.

Summarizing, the specific embodiment proposes an out-of-plane coupler based on reflection. The coupler is fabricated using a two-step direct laser lithography process. First, the reflection plane is patterned and subsequently coated with a high-reflective material, such as gold. Next, a second direct laser lithography step is performed to create the actual coupler structure on top of and in front of the coated reflection plane. This configuration protects the reflection surface from environmental influences, such as packaging adhesives, and enhances mechanical stability through a larger contact area with the substrate.

Thus, the invention improves the optical coupler's stability and shields it from environmental influences. Additionally, the ability to reshape the reflection plane enhances coupling efficiency and allows for versatile beam shaping, significantly boosting overall performance and resolving packaging challenges.

The embodiments described herein illustrate various aspects of the invention and should not be construed as limiting its scope. Modifications, equivalents, and alternative configurations may be apparent to those skilled in the art based on the disclosure provided. The invention is defined solely by the appended claims, which encompass all permissible equivalents and variations. Any reference to specific materials, dimensions, or configurations is for illustrative purposes and should not be interpreted as limiting, unless explicitly stated otherwise.

The present invention is defined by the claims. It may cover the following exemplary aspects:
1. A method of forming an optical coupler for coupling light from an optical fiber to a photonic integrated circuit, PIC, the method comprising:
   forming a first portion of the optical coupler on a substrate, the first portion comprising a light-reflecting surface inclined with respect to the substrate;
   forming a reflective layer on the light-reflecting surface; and
   forming a second portion of the optical coupler on the light-reflecting surface, the second portion comprising a light entrance surface above the light-reflecting surface and a tapering region extending away from the first portion.
2. The method of aspect 1, wherein the tapering region tapers from a first dimension to a second dimension.
3. The method of aspect 1 or 2, wherein the first dimension is 0.2 µm to 4 µm, preferably 0.6 µm to 2 µm, more preferably 0.7 µm to 1.5 µm, and the second dimension is 1 µm to 8 µm, preferably 1.5 µm to 4 µm, more preferably 2.5 µm to 3.7 µm.
4. The method of any preceding aspect, wherein the first and second portions are configured such that incident light, preferably coming from above the light entrance surface, entering the second portion through the light entrance surface is reflected by the reflective layer.
5. The method of any preceding aspect, wherein the first and second portions are configured such that light, preferably the incident light of aspect 4, reflected by the reflective layer is directed into the tapering region.
6. The method of any preceding aspect, wherein the light entrance surface is configured to focus incident light, preferably the incident light of aspect 4 or 5.
7. The method of any preceding aspect, wherein the light-reflecting surface is a planar, convex or concave surface.
8. The method of any preceding aspect, wherein the light entrance surface is a planar, convex or concave surface.
9. The method of any preceding aspect, wherein the first portion and/or the second portion is formed by a 3D printing process such as direct laser writing, or imprint fabrication such as nanoimprint lithography.
10. The method of any preceding aspect, wherein the first portion and/or the second portion is formed by direct laser writing or imprint fabrication.
11. The method of any preceding aspect, wherein the first portion and/or the second portion is transparent to light having a wavelength in the range from 100 nm to 4,000 nm, preferably from 200 nm to 3,000 nm, more preferably from 300 nm to 2,000 nm.
12. The method of any preceding aspect, wherein the first portion and/or the second portion comprises a photoresist material.
13. The method of any preceding aspect, wherein the reflective layer is formed by physical vapor deposition, PVD, sputtering or atomic layer deposition, ALD.
14. The method of any preceding aspect, wherein the reflective layer comprises distributed Bragg reflectors or metal, preferably gold, silver and/or aluminum.
15. The method of any preceding aspect, wherein a thickness of the reflective layer is from 10 nm to 2 µm, preferably from 50 nm to 1 µm, and more preferably from 100 nm to 500 nm.
16. The method of any preceding aspect, wherein the first portion is formed into a wedge shape.
17. The method of any preceding aspect, wherein the second portion comprises a partial-sphere region in connection with the tapering region, wherein the partial-sphere region forms the light entrance surface of the optical coupler.
18. The method of any preceding aspect, wherein the substrate is a substrate comprising the PIC or in which the PIC is formed.
19. The method of any preceding aspect, wherein the optical coupler is an out-of-plane coupler, namely a coupler configured to receive incident light provided by the optical fiber from a direction not substantially horizontal to the surface of the substrate, and preferably from a direction substantially perpendicular to the surface of the substrate.
20. An optical coupler for coupling an optical fiber to a photonic integrated circuit, PIC, the optical coupler comprising:
   a first portion comprising a bottom surface, a light-reflecting surface inclined with respect to the bottom surface, and a reflective layer being arranged on the light-reflecting surface; and
   a second portion arranged on the light-reflecting surface, the second portion comprising a light entrance surface above the light-reflecting surface and a tapering region extending away from the first portion.
21. The optical coupler of aspect 20, wherein the first and second portions are configured such that incident light, preferably coming from above the light entrance surface, entering the second portion through the light entrance surface is reflected by the reflective layer.
22. The optical coupler of aspect 20 or 21, wherein the first and second portions are configured such that light, preferably the incident light of aspect 21, reflected by the reflective layer is directed into the tapering region.
23. The optical coupler of any of aspects 20-22, wherein the light entrance surface is configured to focus incident light, preferably the incident light of aspect 21 or 22.
24. The optical coupler of any of aspects 20-23, wherein the light-reflecting surface is a planar, convex or concave surface.
25. The optical coupler of any of aspects 20-24, wherein the first portion and/or the second portion comprises a photoresist material.
26. The optical coupler of any of aspects 20-25, wherein the reflective layer comprises distributed Bragg reflectors or metal, preferably gold, silver and/or aluminum.
27. The optical coupler of any of aspects 20-26, wherein the first portion is in a wedge shape.
28. The optical coupler of any of aspects 20-27, wherein the optical coupler is an out-of-plane coupler.
29. The optical coupler of any of aspects 20-28, wherein the tapering region tapers from a first dimension to a second dimension.
30. The optical coupler of any of aspects 20-29, wherein the first dimension is 0.2 µm to 4 µm, preferably 0.6 µm to 2 µm, more preferably 0.7 µm to 1.5 µm, and the second dimension is 1 µm to 8 µm, preferably 1.5 µm to 4 µm, more preferably 2.5 µm to 3.7 µm.
31. The optical coupler of any of aspects 20-30, wherein the light entrance surface is configured to defocus the incident light, and the reflective layer formed on the light-reflecting surface is configured to focus the defocused incident light.
32. The optical coupler of any of aspects 20-31, wherein a thickness of the reflective layer is from 10 nm to 2 µm, preferably from 50 nm to 1 µm, and more preferably from 100 nm to 500 nm.
33. The optical coupler of any of aspects 20-32, wherein the second portion comprises a partial-sphere region in connection with the tapering region, wherein the partial-sphere region forms the light entrance surface of the optical coupler.
34. A photonic integrated circuit, PIC, on which one or more optical couplers according to any of aspects 20-33 is provided.
35. Use of the optical coupler of any of aspects 20-33 to couple light from an optical fiber to a photonic integrated circuit, PIC.

### [REFERENCE SIGNS]

- 101, 103, 105:: first portions
- 105b:: bottom surface
- 101s, 103s, 105s:: light-reflecting surface
- 110:: reflective layer
- 120:: second portion
- 121:: partial-sphere region
- 121s:: a light entrance surface
- 122:: tapering region
- 200:: optical coupler

## Claims

1. A method of forming an optical coupler for coupling light from an optical fiber to a photonic integrated circuit, PIC, the method comprising:
forming a first portion of the optical coupler on a substrate, the first portion comprising a light-reflecting surface inclined with respect to the substrate;
forming a reflective layer on the light-reflecting surface; and
forming a second portion of the optical coupler on the light-reflecting surface, the second portion comprising a light entrance surface above the light-reflecting surface and a tapering region extending away from the first portion.

2. The method of claim 1, wherein the tapering region tapers from a first dimension to a second dimension,
preferably,
wherein the first dimension is 0.2 µm to 4 µm, preferably 0.6 µm to 2 µm, more preferably 0.7 µm to 1.5 µm, and the second dimension is 1 µm to 8 µm, preferably 1.5 µm to 4 µm, more preferably 2.5 µm to 3.7 µm.

3. The method of any preceding claim, wherein the first and second portions are configured such that incident light entering the second portion through the light entrance surface is reflected by the reflective layer,
preferably,
wherein the first and second portions are configured such that the incident light reflected by the reflective layer is directed into the tapering region,
more preferably,
wherein the light entrance surface is configured to focus the incident light.

4. The method of any preceding claim, wherein the light-reflecting surface is a planar, convex or concave surface.

5. The method of any preceding claim, wherein the light entrance surface is a planar, convex or concave surface.

6. The method of any preceding claim, wherein the first portion and/or the second portion is formed by direct laser writing or imprint fabrication.

7. The method of any preceding claim, wherein the first portion and/or the second portion comprises a photoresist material.

8. The method of any preceding claim, wherein the reflective layer is formed by physical vapor deposition, PVD, sputtering or atomic layer deposition, ALD.

9. The method of any preceding claim, wherein the reflective layer comprises distributed Bragg reflectors or metal, preferably gold, silver and/or aluminum.

10. The method of any preceding claim, wherein a thickness of the reflective layer is from 10 nm to 2 µm, preferably from 50 nm to 1 µm, and more preferably from 100 nm to 500 nm.

11. The method of any preceding claim, wherein the first portion is formed into a wedge shape.

12. The method of any preceding claim, wherein the second portion comprises a partial-sphere region in connection with the tapering region, wherein the partial-sphere region forms the light entrance surface of the optical coupler.

13. An optical coupler for coupling an optical fiber to a photonic integrated circuit, PIC, the optical coupler comprising:
a first portion comprising a bottom surface, a light-reflecting surface inclined with respect to the bottom surface, and a reflective layer being arranged on the light-reflecting surface; and
a second portion arranged on the light-reflecting surface, the second portion comprising a light entrance surface above the light-reflecting surface and a tapering region extending away from the first portion.

14. A photonic integrated circuit, PIC, on which one or more optical couplers according to claim 13 is provided.

15. Use of the optical coupler of claim 13 to couple light from an optical fiber to a photonic integrated circuit, PIC.
